## Europäisches Patentamt

## European Patent Office

## Office européen des brevets

(19)

(11) Publication number: **0 035 992**
**B1**

(12)

# EUROPEAN PATENT SPECIFICATION

(45) Date of publication of patent specification: **22.06.83**

(21) Application number: **80900312.2**

(22) Date of filing: **04.02.80**

(86) International application number:
**PCT/SE80/00034**

(87) International publication number:
**WO 80/02631 04.12.80 Gazette 80/27**

(51) Int. Cl.³: **H 04 Q 9/00, H 04 L 25/00, H 04 L 27/00**

(54) DATA TRANSMISSION ARRANGEMENT.

(30) Priority: **14.05.79 SE 7904215**

(43) Date of publication of application:
**23.09.81 Bulletin 81/38**

(45) Publication of the grant of the patent:
**22.06.83 Bulletin 83/25**

(84) Designated Contracting States:
**DE FR GB NL SE**

(56) References cited:
**CH - A - 610 167**
**DE - A - 2 826 017**
**GB - A - 1 407 872**
**NO - B - 132 815**

(73) Proprietor: **DIANTEK HB**
**Box 6019**
**S-162 06 Vällingby (SE)**

(72) Inventor: **THERN, Rolf**
**Lillhersbyvägen 8**
**S-191 45 Sollentuna (SE)**
Inventor: **RUUS, Jan**
**Björnidegränd 107**
**S-162 06 Vällingby (SE)**

(74) Representative: **Bäckström, Leif Conny**
**Protector Leif C. Bäckström AB Sandviksvägen 32**
**S-162 39 Vällingby (SE)**

Courier Press, Leamington Spa, England

Data transmission arrangement

This invention relates to an arrangement for bi-directional transmission of bit-sequences between a central control unit and a plurality of terminal units connected to the central control unit by means of a transmission line, over which the terminal units can be supplied with power from a direct current power source located at the central control unit.

An arrangement in accordance with the above is useful, for instance, in data acquisition and feedback of messages, as well as for process control.

Previous, known arrangements for such a type of data transmission have limitations in various respects.

One such limitation in previous arrangements is the capability of transmission in only one direction on a single line, for example, to acquire measurement data from a number of sensors. In many applications, however, there is a demand for signaling in the other direction as well, such as to manoeuvre an actuator, after processing a signal received from a temperature sensor.

In previous arrangements this can be done by providing special lines for feedback signaling. In this case, each sensor with accompanying actuator requires two pairs of wires.

One of the problems with such data transmission arrangements is supplying power for sensors, indicators, etc. For these types of components, as well as others with relatively low power consumption, it is desirable to be able, when necessary, to supply power via the transmission line from a central power source. This is usually achieved by the use of an additional pair of wires for power supply.

The transmission distances in data transmission applications can be as long as 5 km or more. It will readily be seen that the cable installation will form a dominant part of the total costs of the data transmission arrangement. In addition, modification or extension of the system can be difficult, in which case it may be necessary to add new pairs of wires and to re-plan the exploitation of the lines.

In data transmission applications, where large quantities of data are transferred between, for example, a central computer and a number of terminal computers, the transmission is accomplished via a line to which the communicating units are connected by means of accompanying modulator-demodulator circuitry (so-called modems). The construction and operation of such modems are optimized among other things with respect to a high transmission capacity. In, for example, data aquisition (data logging) applications, there is a demand for only relatively low transmission capacities, for instance 300 bauds, in which case modems are not interesting. Also, for reasons of costs, modem circuitry is not considered in the applications for which this invention is best suited.

In order to function well, a data transmission arrangement for the above field of application ought to fulfill the following conditions:

— bi-directional transmission
— simple cable installation
— power supply if necessary via the transmission line
— insensitivity to disturbances
— simple overall installation
— simple construction of integral units

One of the goals of this invention is, by proper choice of transmission method and its realization, to obtain an arrangement as described above, which fulfills all the above conditions, and in which the disadvantages, both in usage and in cost, of previous known data transmission arrangements are eliminated.

This goal is achieved with an arrangement in accordance with what has been specified in the preamble of the present invention, which is characterized in that the transmission line consists of a two-lead cable to which a plurality of terminal units are connected in parallel: in that the central control unit is connected to said two-lead cable via a central line unit which, for transmission, consists in part of a generator, controllable by bit-sequences, for producing a bit-sequence modulated transmission frequency signal, and in part of an output stage for superimposing said transmission frequency signals upon a constant voltage signal derived from a direct current power supply: in that each terminal unit is connected to said two-lead cable via a terminal line unit which, for reception, consists of means for reconstructing bit-sequences from said transmission frequency signal, and, for transmission, consists of a current sink, controllable by bit-sequences, for producing a bit-sequence modulated current variation in said two-lead cable: in that said central line unit consists, for reception, in part of a detector, connected in series with said two-lead cable, for sensing a current variation in said two-lead cable, and in part of means for reconstructing bit-sequences from the output signal of said detector: in that the input and output circuits, connecting said central line unit and said terminal line units to said two-lead cable, have high impedance for both frequency signals and constant voltage: and in that a terminal line unit, in appropriate cases, consists of means for reception of direct current power having high input impedance for frequency signals, the arrangement being such that transmission is effected in one direction by superimposing a frequency signal upon an essentially stable direct voltage level on the transmission line and, in the other direction, by a variation in the direct current drawn from the transmission line, with the retained capability of supplying power to the terminal units.

In a preferred embodiment of the invention, frequency-shift modulation is used for transmission from the central control unit to the terminal units, while bit-sequences in phase-shift modulated form control a current sink for transmission in the other direction.

Since the terminal units have high input and output impedances, the number of terminal units can easily be increased upon need. The two-lead cable, besides being relatively inexpensive in itself, allows for savings in necessary space and in installation. The chosen combination of transmission and reception methods makes it easy to avoid interference without the use of expensive filtering arrangements. Transmission from the terminal units requires very little power, which power easily can be supplied via the two-lead cable. Without taking any special measures, such as the use of a line amplifier, 40—50 terminal units can be connected to a two-lead cable with a length of 5 km. That which limits the possible number of terminal units is partly the voltage drop in the transmission line when simultaneously transmitting and supplying power, and partly the time necessary for the central control unit to address all the terminal units. Galvanic insulation between the terminal units and the transmission line can easily be accomplished.

Other features and advantages of the invention will be set forth in, or are apparent from the claims.

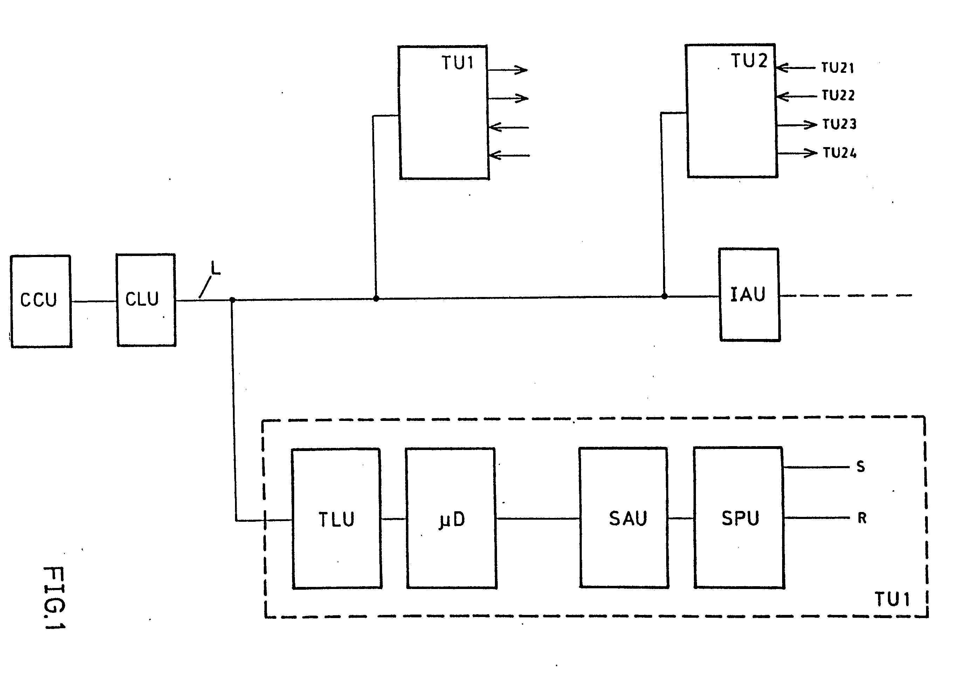

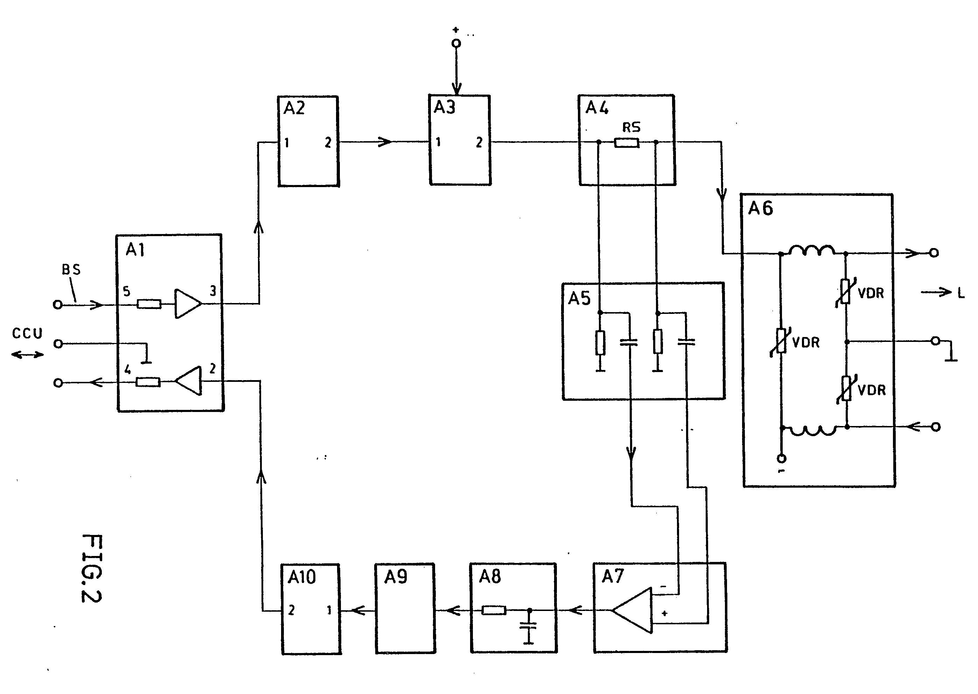

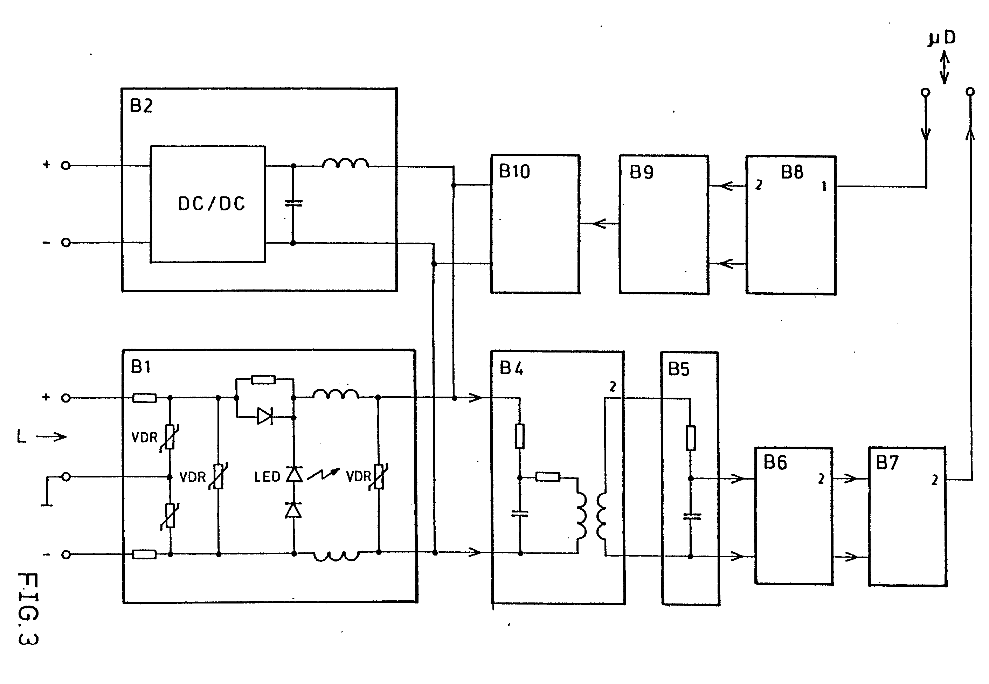

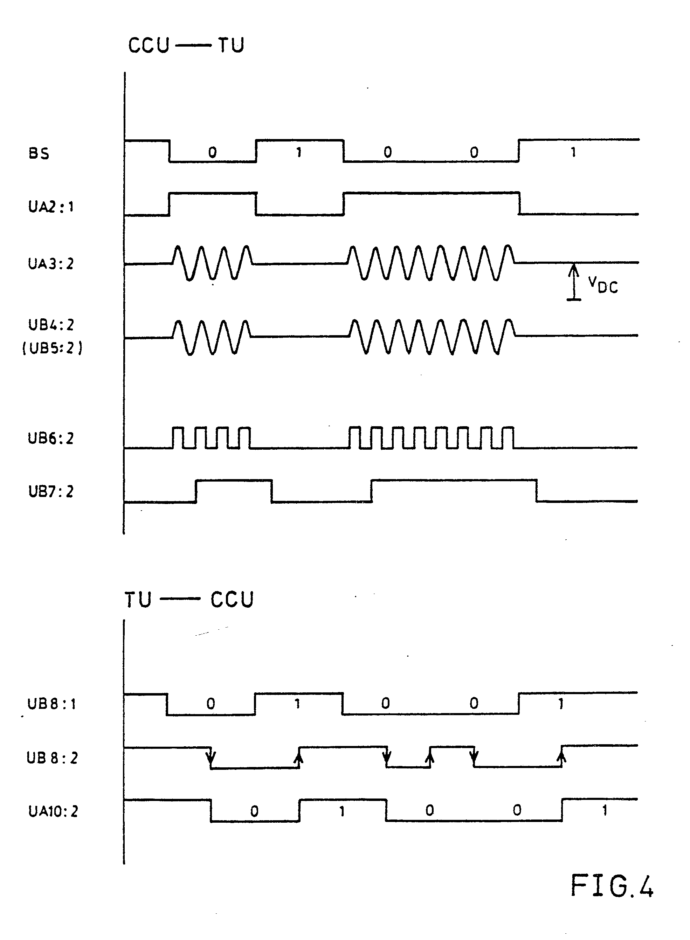

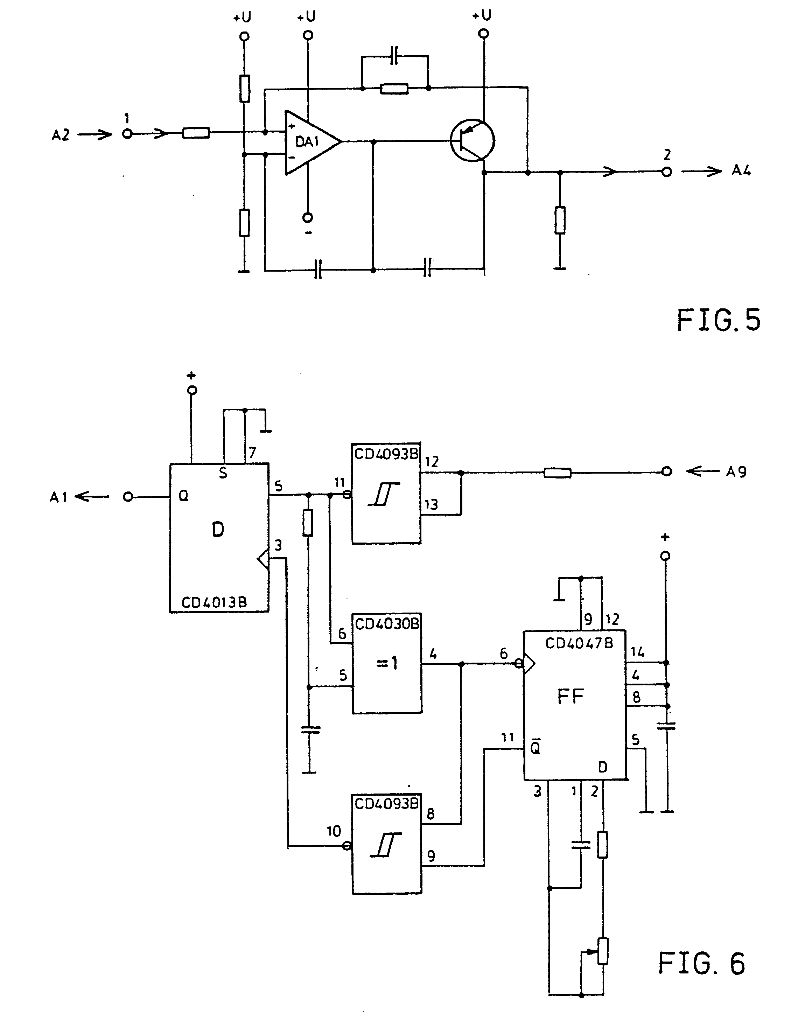

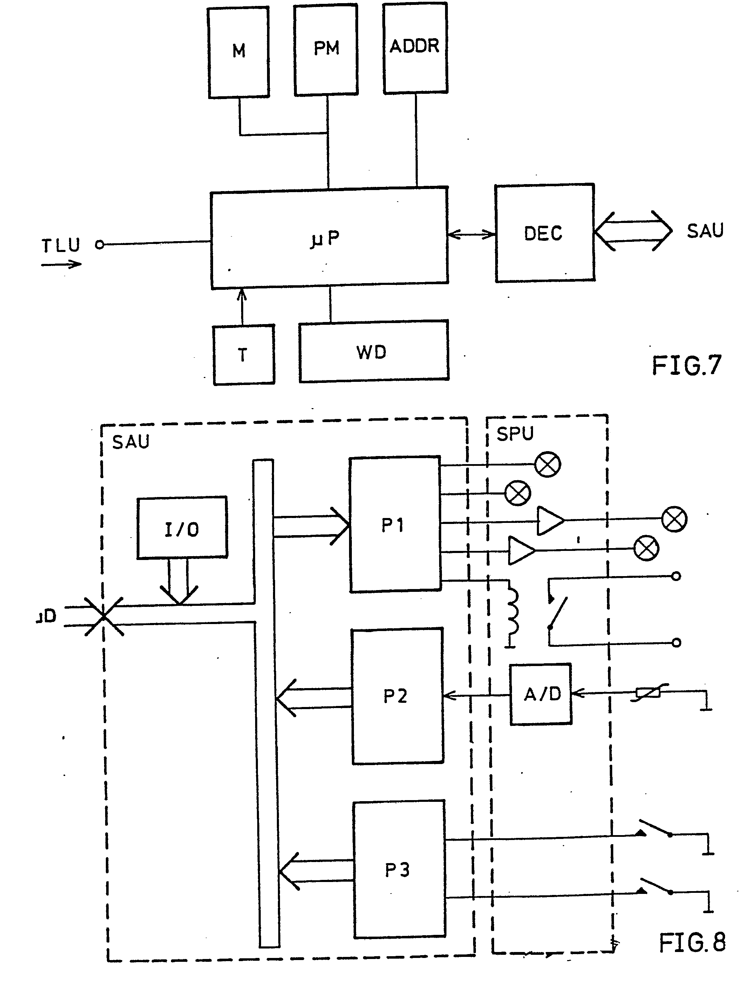

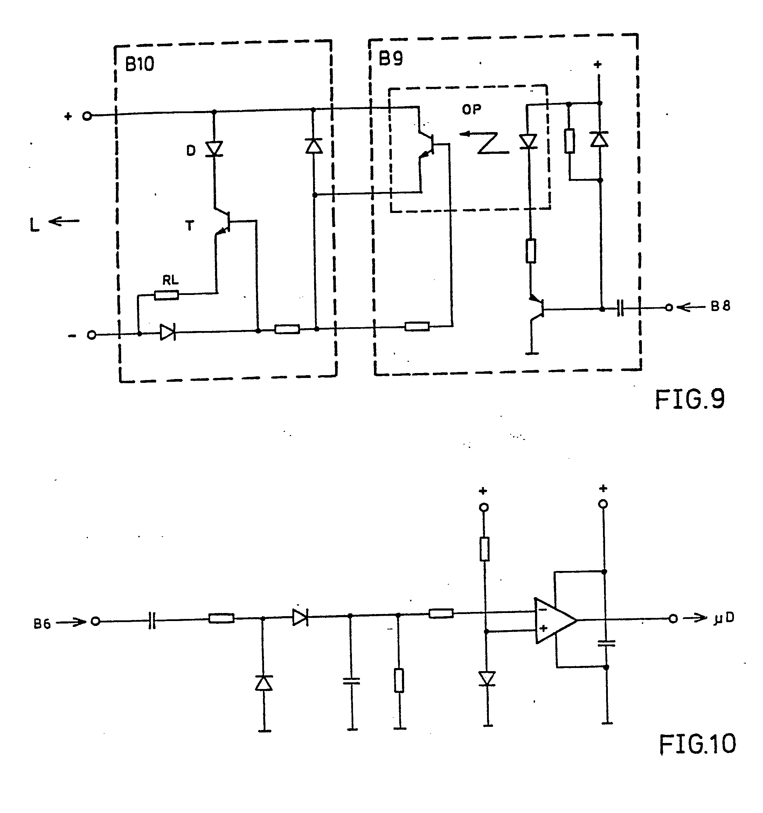

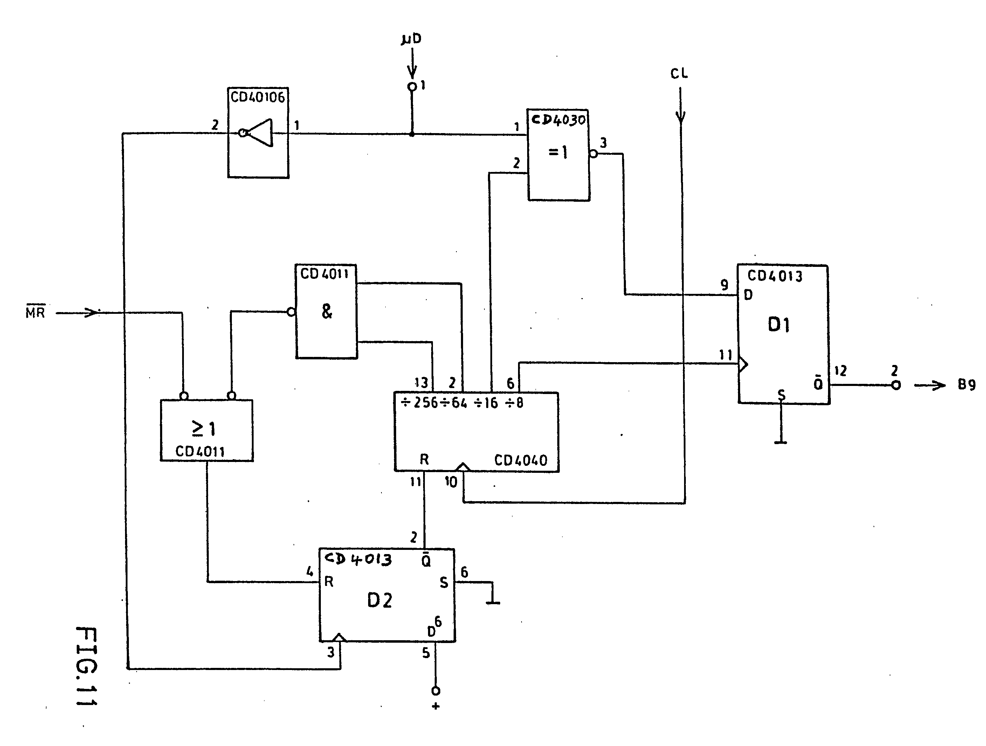

The invention will hereinafter be more fully described, by way of example, with reference to the accompanying drawings, in which *Fig. 1* shows a block diagram of a transmission arrangement in accordance with the invention: *Fig. 2* shows a detailed block diagram of the central line unit CLU in Fig. 1: *Fig. 3* shows a detailed block diagram for a terminal line unit TLU in Fig. 1: *Fig. 4* shows signal wave forms at indicated positions in Fig. 2 and Fig. 3: *Fig. 5* shows a schematic circuit diagram of the output stage A3 in Fig. 2: *Fig. 6* shows a schematic circuit diagram for the demodulator A10 in Fig. 2: *Figs. 7 and 8* show the blocks $\mu$D and SAU + SPU in Fig. 1: *Fig. 9* shows a schematic circuit diagram for the blocks B9 and B10 in Fig. 3: *Fig. 10* shows a schematic circuit diagram for the demodulator B7 in Fig. 3 and *Fig. 11* shows a schematic circuit diagram for the phase-shift modulator B8 in Fig. 3.

The data transmission arrangement according the invention, which is depicted in Fig. 1, consists of a central control unit CCU, which normally comprises a minicomputer with a signal-processing capacity in accordance with the size of the data transmission arrangement, together with accompanying peripheral equipments, such as display terminal, keyboard, etc., chosen in accordance with the intended usage of the arrangement. The CCU is connected to a central line unit CLU, which comprises means for the transmission and reception of bit-sequences to and from CCU, as well as means for supplying power to the transmission line L. The transmission line consists of a two-lead cable, to which an arbitrary number of terminal units TU1, TU2, are connected in parallel. The transmission line L is itself terminated with a termination unit IAU for impedance adaption or line amplification.

The terminal units are connected as shown to the desired means (TU21, TU22, . . . , TU24 at TU2) for measurement, indication, or control, such as temperature sensors, indicator lamps, or control relays. Messages between these means and CCU can be exchanged over the transmission line, the supply of power to these means also is provided over the transmission line.

TU1 is shown in greater detail and, seen from the transmission line L, comprises a terminal line unit TLU, comprising means for transmission and reception of bit-sequences to and from CCU as well as means for the reception of power. TLU further comprises means for logic-signal adaption of information signals according to RS 232 standard (V24-interface). In this way, TLU can be connected to a microcomputer $\mu$D which has the task of selecting relevant information for the terminal concerned and of controlling the exchange of information with the sensors, indicators, etc. at that terminal. The blocks TLU and $\mu$D are general for the entire arrangement, with the exception of certain programming of the microcomputer which is specific for each terminal, and are a part of each TU. For the communication of $\mu$D with its sensors, indicators, etc., the signals are adapted in a signal adaption unit SAU. These signals are further processed in a signal processing unit SPU, in which the signals are given a suitable form and, after possible amplification, are fed on to, for example, a control relay (R). In the other direction, a signal from a sensor (S) is given a suitable form for transfer to SAU. It will be seen that SAU and SPU must be constructed with respect to the sensors, indicators, etc. connected to that terminal. As is shown in greater detail in Fig. 3, TLU further comprises a circuit for the reception of direct current power from CLU.

The signal transmission method in the preferred embodiment, with frequency-shift modulation in the direction from CCU to TU1, TU2, . . . and with phase-shift modulation in the opposite direction makes possible an especially advantageous and simple construction of the blocks CLU and TLU. For the sake of completeness, it should be stated that the current variations mentioned above can be level-shift modulated, frequency-shift modulated, or similarly modulated. Phase-shift modulation, however, permits greater insensitivity to disturbances. The blocks mentioned above will be described in more detail in the following:

Fig. 2 shows a detailed block diagram of CLU. Closest to the central control unit CCU is a block A1 which at 5 receives bit-sequences according to RS 232 standard.

In A1 a bit-sequence passes an inverter and continues thereafter to control input 1 of a sine-wave generator A2. The sine-wave generator includes an integrated circuit Intersil 8038 connected according to Fig. 10, page 42 of Intersil Semiconductor, Analog Handbook, the control input of which being fed from A1 via a resistor and a level controlling transistor. When the control input 1 receives a high-level signal, a sine-wave signal is delivered, during the same time, at output 2. A low-level signal at input 1, causes zero voltage at output of A2. This will be described in more detail in connection with Fig. 4.

The output signal from A2 continues to an output stage A3, arranged to deliver direct current power, together with the modulated signal from A2, to the line L. A detailed circuit diagram for A3 is shown in Fig. 5. At output 2 of A3, a direct voltage signal, upon which an information signal is superimposed, is obtained from A2. The output signal from A3 continues to a current variation detector A4, arranged to sense the variations in current from A3 to the line L. In this example A4 includes a low ohm resistor $R_s$ connected in series with output 2 of A3.

The output of A4 is connected to the line L via a block A6 which includes conventional protection circuitry with voltage dependent resistance VDR. The described blocks A1, A2, A3, A4 and A6 form the path of a signal for transmission from CCU to TU1, TU2.

Connected in parallel with the sensing resistor in A4 is a high-pass filter A5, at the output of which a signal is obtained, representing the significant high-frequency voltage variations over A4. The output signal of A5 is amplified in a differential amplifier A7, and then passes a low pass filter A8.

The cut-off frequencies for A5 and A8 are chosen so that A5 suppresses frequencies lower than the signal frequencies for transmission and reception, while A8 suppresses frequencies higher than those signal frequencies obtained from the line L.

The transmission frequency of the frequency-shift modulation from A2 is preferably chosen at a factor of at least 3 times higher than the bit-frequency of reception. These frequencies can be, for instance, 5 kHz and 300 Hz, respectively. Such a choice demands less of the filters to be used, the construction of which is thereby simplified. It will be seen that the bit-frequency for transmission need not be the same as that for reception.

The output signal from A8 continues to a pulse generator A9 which includes a zero-crossing detector for converting the essentially sine-wave formed current pulses, after filtering in A5 and A8, from the line L, to square wave pulses. A detailed circuit diagram for such a zero-crossing detector can be found in Linear Applications, Vol. 2, National Semiconductor, Sept. 1976, page AN 87—6.

The output signal from A9 continues to a demodulator signal converter A10, which demodulates the phase-shift modulated current pulse signal, and converts the signal according to RS 232 standard. A detailed circuit diagram for A10 is shown in Fig. 6.

Before continuing to CCU, the RS—232 output signals from A10 pass an inverter/level adapter located in A1.

The blocks A6, A4, A5, A7, A8, A9, A10, and A1 form the path for reception of a signal.

Fig. 3 shows a detailed block diagram for a TLU. Closest to the two-lead cable L is a block B1 which includes protection circuitry and disturbance damping circuitry to protect the electronic components in the terminal from inadvertent reversals of polarity during the connection of a terminal to L, as well as to dampen the disturbance frequencies which may appear on L. Especially advantageous is the light-emitting diode LED which glows in case of an improper connection.

The direct voltage on the line L is an unregulated voltage input to block B2 which includes a reactive coil and a capacitance, which are chosen so that B2 has a high input impedance for the signal frequencies. B2 further includes a direct voltage converter DC/DC, which permits galvanic insulation from L, the output of which is a regulated direct voltage for the supply of power for the terminal.

The path for reception of a signal from L is formed by the blocks B4, B5, B6, and B7. B4 comprises a low-pass filter, a series resistor with high resistance, and a transformer for galvanic insulation from L. These components are chosen so that B4 has high input impedance for both signal frequencies and the direct voltage. B5 comprises a low-pass filter with a cut-off frequency somewhat higher than the signal frequencies. Essentially sine-wave formed pulses are obtained from B5, which represent the sine-wave pulses from A2 with the intervening intervals of zero voltage. These pulses are converted in B6 to square-wave pulses using the same type of zero-crossing detector as in A9. These square-wave pulses are demodulated in B7 which includes a two-frequency discriminator (see Fig. 10) for producing binary signals in accordance with RS 232 standard. The logic signals so obtained continue to the microcomputer $\mu$D (see Fig. 1) for further conveyance to SAU and SPU (see Fig. 1). This part of the signal processing will be described below in more detail in connection with Figs. 7 and 8.

The path for transmission in a TU of RS 232 signals from $\mu$D to the line L is B8, B9, and B10.

In B8 (see Fig. 11) RS 232 pulses are phase-shift modulated and continue thereafter to the opto-switch B9 for galvanic insulation. The outputs of the opto-switch are connected to the control inputs of a controllable current sink B10, the current drawn being made to alternate between 0 mA and, for example, 20 mA depending upon the control signals, and thus the information obtained from $\mu$D. When the phase-shift modulated signal from B8 is at a low level, the current sink draws no current from L. This also applies when TU is not transmitting. As such, B10 provides no additional load on the line L when transmitting from CCU to TU. A detailed circuit diagram of B9 and B10 is shown in Fig. 9.

Seen from the line L, B4 and B10 present a high impedance for both signal frequencies and direct voltage (when B10 is inactive). Current flows via B2 only to the units to be supplied with power from the line L. It will be readily seen that by the appropriate design of the input circuits B2 and B4, it will be possible to connect a large number of terminal units in parallel to the line L, while retaining low transmission power usage from CLU: Also contributing to this end, are that the chosen methods of modulation permit a certain diminishing of amplitude, as well as the moderate demand on the rate of transmission (for example 300 Bauds).

Fig. 4 shows the signal waveforms at indicated positions in Figs. 2 and 3.

For transmission from CCU to a terminal TU, a bit-sequence B5 is produced by CCU and appears at A1 on input 5. From A1 the bit-sequence is presented in inverted form UA2:1. The sine-wave generator A2 is activated in pace with UA2:1 and produces sine-wave pulses when UA:1 is high, otherwise: zero voltage. The output signal from A2 is superimposed upon a direct voltage VDC in A3 which outputs the signal UA3:2 which, by way of A4 and A6, is fed to the line L.

The transmission signal thus produced is received by all the terminal units. Since the input and output circuits of the terminal line units have a high impedance for the transmission frequency, as well as the direct current signal, the transmission power can be held at a low level, as can the power losses in the series resistor in A4.

The transmitted signal is received (see Fig. 3) at the terminal line unit in the block B4, which presents the signal UB4:2 on output 2, the signal representing an amplitude damped version of UA3:2, superimposed possibly with higher frequency disturbances which will be removed in the filter B5. The signal UB4:2 is converted to square wave pulses in B6, producing the signal UB6:2 which is demodulated in B7 to give the signal UB7:2. It can be seen from the signal diagram that UB7:2 is a somewhat phase-displaced version of the control voltage UA2:1 presented to the sine-wave generator A2. The signal UB7:2 continues to $\mu$D (see Fig. 1) for further processing.

For transmission from a TU to CCU, the bit-sequence to be transmitted is delivered from $\mu$D to B8, at input 1 of which the signal UB8:1, in accordance with RS 232 standard, is received. In B8, the signal UB8:1 is phase-shift modulated, producing the signal UB8:2, where the relevant changes in phase are marked with arrows. The signal UB8:2 controls the opto-switch B9, which in turn controls the current sink B10 in which the current drawn from the line L is made to vary according to the signal UB8:2.

The varying current drawn from the line L produces a varying voltage drop over the sensing resistor in A4 in the central line unit CLU. The voltage signal from A4 passes the high-pass filter A5, is then amplified in the amplifier A7, is low-pass filtered in A8, and is converted to a square-wave signal by the zero-crossing detector in A9. This part of the signal processing corresponds to that which occurs in TU in the blocks B5 and B6. At the output of A9, there is obtained a signal which is a version of the phase-shift modulated signal UB8:2. This signal is demodulated finally in A10, and is there given RS 232-form. The signal UA10:2 is obtained at the output of A10, this signal being a delayed version of that signal originally from the terminal unit.

According to the above description, a simplified frequency-shift signal, in which one of the frequencies is zero, is sent from CCU to TU. It can be seen that modulation with two frequencies from A2 is equally possible, as is controlling A2 with a phase-shift modulated version of the transmission bit-sequence. It is equally possible to use various transmission frequencies, to be used for group-addressing of the terminals. Such procedures lead, however, to a complicated construction of A2, input filters, input and output circuits, as well as demodulators.

Fig. 5 shows a detailed circuit diagram for the output stage A3 in CLU. A differential amplifier DA1 is connected to the base of a PNP-transistor, the emitter of which is connected to a positive reference voltage +U. The transmission signal, superimposed upon a direct voltage VDC (see Fig. 4, UA3:2), is obtained at the collector of the transistor. When no signalling is taking place, this circuit functions as a constant voltage source with the output voltage VDC for supplying power to the connected terminals.

Fig. 6 shows a detailed circuit diagram for the demodulator A10 in CLU. The demodulator is constructed using integrated circuits, where the nomenclature given for the inputs and outputs used on the integrated circuit package is in agreement with the manufacturers' data sheets. As such, there is included two Schmitt-triggers of the type CD 4093 B, en exclusive OR circuit (=1) of the type CD 4030 B, a monostable multivibrator (FF) of the type CD 4047 B, and a D Flip-Flop of the type CD 4013 B, connected as shown in Fig. 6. The integrated circuits named above are manufactured by RCA Semiconductor.

The changes in phase in the signal from A9, that is a signal representing the signal UB8:2 in Fig. 4, is detected by a first Schmitt-trigger and exclusive OR circuit, the output signal of which is presented at the control input of the multivibrator FF, which is then activated. By proper choice of the components connected to the multivibrator, the time for returning to the stable state can be set at about 3/4 of the bit-time. The signal at the Q̄-output of the multivibrator and the output signal from the exclusive OR circuit controls the second Schmitt trigger, which thereby produces an output signal with a time-distance that is greater than half of the bit-time, thereby suppressing the non-relevant changes in phase of the input signal. The output signal from the second Schmitt trigger finally is used to control the D flip-flop, which provides the demodulated bit-sequence at its Q-output.

Figs. 7 and 8 show simplified block diagrams for the blocks $\mu$D, SAU, and SPU in Fig. 1. As the invention does not primarily concern these parts of the data transmission arrangement, they will only be briefly described, reference being made instead to the extensive literature in this field.

As such, the microcomputer $\mu$D includes a microprocessor $\mu$P with accompanying data memory M, program memory PM, and terminal addressing means ADDR. The terminal address can be obtained by strapping. A timing circuit T and a monitoring circuit WD are also connected to $\mu$P. In addition, there is included a decoder DEC with the task of giving information the proper form for communication between $\mu$P and the block SAU.

As is shown in Fig. 8, input and output control in the signal adaption unit SAU occurs through I/O of information to input and output ports P1, P2, P3, . . . which preferably work with 8 bits. In the signal processing unit SPU the signals to and from the connected indicator lamps, control relays, sensors, monitoring contactors, etc., are given suitable form for communication with the ports P1, P2, P3, . . . in SAU.

Fig. 9 shows detailed circuit diagram for the opto-switch B9 and the current sink B10 in Fig. 3. The signal from the phase-shift modulator B8 (UB8:2 in Fig. 4) is fed, via an output stage, constructed around a PNP-transistor, to the input of the opto-switch OP. OP includes, as shown, a light emitting diode and a phototransistor. The output signal from OP controls the current sink B10, which is constructed of diodes, resistors and an NPN-transistor. Due to the effect of the opto-switch upon the base voltage of the transistor, the current can be drawn over the path D, T, R. The magnitude of the diminished current is determined by the impedance of this path. It will be noticed that this in no way implies a short-circuiting of the two-lead cable L. This is a demand, as L must be capable of supplying power to the terminal units.

Fig. 10 shows a detailed circuit diagram for the demodulator B7 in Fig. 3. The demodulator is constructed as a two-frequency discriminator and includes a differential amplifier with the input components connected as shown. During the time intervals when the discriminator receives pulse groups in the input signal UB6:2 in Fig. 4, the differential amplifier produces a high-level signal, while a zero-level signal is produced during the intervals with no pulses, whereby the output signal receives the form of UB7:2 in Fig. 4.

Fig. 11 shows a detailed circuit diagram for the phase-shift modulator B8 in Fig. 3. This is constructed of integrated circuits where the nomenclature for the inputs and outputs used on the respective integrated circuit package has been indicated. This circuit of the type CD 4030, 2D flip-flops of the type CD 4013, and AND circuit of the type CD 4011, an OR circuit of the type CD 4011, and an inverter of the type CD 40106. All of these components are manufactured by RCA Semiconductor, and are connected as shown in Fig. 11.

From $\mu$D bit-sequences in accordance with RS 232 standard are obtained, which are presented to B9 in phase-modulated form from the Q̄-output of the D flip-flop, D1. The counter of the type CD4040 is fed at 10 with a clock signal, the frequency CL of which is 16 times the bit-frequency. For producing necessary control conditions, CL scaled down by factors of 8, 16, 64 and 256, respectively, is derived from the counter. The output signal from the exclusive OR circuit is presented at the D-input of D1 and is high when either the bit-sequency or CL/16 is high. D1 is triggered at input 11 by CL/8. The D flip-flop D2 has the task of giving the counter and D1 the correct starting signal, depending upon the bit-sequence. As such, the Q̄-output is connected to the reset-inputs of these components. The AND circuit receives CL/64 and CL/256, its output signal, via the OR circuit, being presented at the reset-input of D2, which thereby is periodically reset in accordance with a chosen message length. D2 can even be reset, via the OR circuit by a special main reset signal MR.

**Claims**

1. An arrangement for bi-directional transmission of bit-sequences between a central control unit (CCU) and terminal units (TU) connected to said central control unit by a transmission line (L), over which said terminal units can, upon need, be supplied with power from a direct current power source at said central control unit, characterized in that said transmission line comprises a two-lead cable to which a plurality of terminal units (TU1, TU2 . . .)

are connected in parallel, and to which said central control unit (CCU) is connected via a central line unit (CLU), said central line unit comprising, for transmission, a generator (A2), controlled by said bit-sequences (BS, Fig. 4), for producing a bit-sequence modulated transmission frequency signal, and an output stage (A3) for superimposing said transmission frequency signal upon a direct voltage signal (VDC) produced by said direct current power source, each of said terminal units being connected to said two-lead cable via a terminal line unit (TLU) which, for reception, comprises means (B4, B5, B6, B7) for reconstructing transmitted bit-sequences from said transmission frequency signal, and which, for transmission, comprises a current sink (B10), controlled by bit-sequences, for producing a bit-sequence modulated current variation in said two-lead cable, said central line unit (CLU) comprising, for reception, a detector (A4), connected in series with said two-lead cable, for sensing said current variations, and further comprising means (A7, A8, A9, A10) for reconstructing bit-sequences from the output signal of said detector, wherein the input and output circuits of said central line unit and said terminal line units which are connected to said two-lead cable have high impedance for both frequency signals and direct voltages, and in that a terminal line unit, in certain cases, comprises means for reception of direct current power, having high impedance for frequency signals, the arrangement being such that transmission occurs in one direction with a frequency signal superimposed upon an essentially stable direct voltage level on said transmission line, and, in the other direction, by a variation in the direct current drawn from the transmission line, retaining the possibility of supplying power to said terminal units.

2. The arrangement according to Claim 1, characterized in that said generator (A2) comprises a sine-wave generator for producing a sine-wave transmission frequency signal, the frequency of which alternates, dependent upon bit-sequence information.

3. The arrangement according to Claim 2, characterized in that said sine-wave generator is made to alternate between a sine-wave signal and an absence of said sine-wave signal, whereby said transmission frequency signal receives the form of a frequency-shift signal, the frequency of which alternates between a predetermined frequency and zero frequency.

4. The arrangement according to Claim 2 or 3, characterized in that said sine-wave generator, dependent upon control information with respect to a group of terminal units, produces a transmission frequency signal containing at least one specific frequency for said group, whereby selective addressing of said group is made possible.

5. The arrangement according to any of the preceding Claims, characterized in that said detector (A4) comprises a resistor ($R_s$), connected in series with said two-lead cable, over which is produced a voltage, which varies according to the current drawn from said two-lead cable, and which is fed to said reconstruction means (A7, A8, A9, A10).

6. The arrangement according to any one of the preceding Claims, characterized in that said current sink (B10) comprises a current loop, connected in parallel to said two-lead cable, in which the conductibility can be made to alternate between zero and a value which gives a current of appropriately predetermined magnitude for the detectability of said current variation, whereby the direct voltage level on said two-lead cable can be retained essentially unchanged.

7. The arrangement according to Claim 6, characterized in that said current loop comprises the emitter-collector path in a transistor (T), connected in series with a current limiting resistor ($R_L$), whereby the base of said transistor receives a voltage which varies according to a bit-sequence signal.

8. The arrangement according to Claim 6 or 7, characterized in that said terminal line unit (TLU) comprises a modulator (B8) for phase-shift modulation of a bit-sequence signal prior to conveyance to said current sink, wherein said conveyance occurs, preferably via an opto-switch (OP), by means permitting galvanic insulation from said transmission line.

9. The arrangement according to any of the preceding Claims, characterized in that said transmission frequency signals have a frequency which is at least a factor of 3 times higher than the bit frequency of said bit-sequences.

10. The arrangement according to any of the preceding Claims, characterized in that said means for reconstruction of bit-sequences in said central line unit (CLU) comprise, in order from the output of said detector (A4), a high-pass filter (A5) with cut-off frequency somewhat lower than the signal frequencies used, a differential amplifier (A7) for amplifying pulse signals, a low pass filter (A8) with cut-off frequency somewhat higher than the frequency of the pulses produced by said current variation, means (A9) for restoring the square-wave character of said pulses, and a demodulator (A10) for reconstructing transmitted, preferably phaseshift modulated, bit-sequences.

11. The arrangement according to any of the preceding Claims, characterized in that said means for reconstructing bit-sequences in said terminal line unit (TLU) comprise, as seen from said two-lead cable, an input stage (B4) for level adaption of frequency signals received from said central line unit (CLU) and for suppression of signals with lower frequency, said input stage further comprising means for galvanic insulation from said transmission line, a low-pass filter (B5) with cut-off frequency somewhat higher than said frequency signals, means (B6) for restoring the square-wave character of received pulses, and a demodulator (B7), preferably a two-frequency discriminator, for demodulating a frequency-shift modulated transmission frequency signal.

**Patentansprüche**

1. Anordnung zur zweiseitig gerichteten Übertragung von Bit-Sequenzen zwischen einer zentralen Steuereinheit (CCU) und Anschlußeinheiten (TU), die an zentrale Steuereinheit über eine Übertragungsleitung (L) angeschlossen sind, über die die Anschlußeinheiten bei Bedarf mit Leistung von einer Gleichstromversorgungsquelle bei der zentralen Steuereinheit versorgt werden können, dadurch gekennzeichnet, daß die Übertragungsleitung ein zweiadriges Kabel aufweist, an das eine Anzahl von Anschlußeinheiten (TU1, TU2 . . .) zueinander parallel angeschlossen sind und an das die zentrale Steuereinheit (CCU) über eine zentrale Leitungseinheit (CLU) angeschlossen ist, wobei die zentrale Leitungseinheit für die Übertragung einen Generator (A2) aufweist, der durch die Bit-Sequenzen (BS, Fig. 4) gesteuert wird um ein Bit-Sequenzen-moduliertes Übertragungssequenzsignal zu erzeugen, und eine Ausgangsstufe (A3) aufweist, um das Übertragungsfrequenzsignal einem Gleichspannungssignal (VDC) zu überlagern, das von der Gleichstromquelle erzeugt wird, daß jede der Anschlußeinheiten an das zweiadrige Kabel über eine Anschlußleitungseinheit angeschlossen ist, die zum Empfang Einrichtungen (B4, B5, B6, B7) aufweist, um aus dem Übertragungsfrequenzsignal die übertragenen Bit-Sequenzen zu rekonstruieren, und die zum Senden eine Stromsenke (B10) aufweist, die von den Bit-Sequenzen gesteuert wird, um eine Bit-Sequenz-modulierte Stromänderung in dem zweiadrigen Kabel hervorzurufen, wobei die zentrale Leitungseinheit (CLU) für den Empfang einen Detektor (A4) aufweist, der in Reihe an das zweiadrige Kabel angeschlossen ist um die Stromveränderungen festzustellen, und daß Vorrichtungen (A7, A8, A9, A10) vorgesehen sind für die Rekonstruktion der Bit-Sequenzen aus dem Ausgangssignal des Detektors, wobei die Eingangs- und Ausgangsschaltungen der zentralen Leitungseinheit und der Anschlußleitungseinheiten, die an das zweiadrige Kabel angeschlossen sind, hohe, Impedanzen sowohl für die Frequenzensignale wie für die Gleichspannungen aufweisen, und daß eine Anschlußleitungseinheit in bestimmten Fällen Einrichtungen für den Empfang der Gleichspannungsversorgung aufweist, welche eine hohe Impedanz für frequente Signale aufweisen, und daß die Anordnung derart ist, daß die Übertragung in der einen Richtung mit einem frequenten Signal erfolgt, das einem im wesentlichen stabilen Gleichspannungspegel auf der Übertragungsleitung überlagert wird, und in der anderen Richtung mittels einer Änderung des von der Übertragungsleitung gezogenen Gleichstromes erfolgt, wobei die Möglichkeit erhalten bleibt, die Anschlußeinheiten mit Leistung zu versorgen.

2. Anordnung nach Anspruch 1, dadurch gekennzeichnet, daß der Generator (A2) einen Sinuswellengenerator aufweist, um ein sinusförmiges Übertragungsfrequenzsignal zu erzeugen, dessen Frequenz sich in Abhängigkeit von der Bit-Sequenz-Information ändert.

3. Anordnung nach Anspruch 2, dadurch gekennzeichnet, daß der Sinuswellengenerator zwischen einem Sinuswellensignal und dem Fehlen eines Sinuswellensignals wechselt, wodurch das Übertragungsfrequenzsignal die Gestalt· eines Frequenzverschiebungssignals annimmt, dessen Frequenz zwischen einer vorgegebenen Frequenz und Null-Frequenz wechselt.

4. Anordnung nach Anspruch 2 oder 3, dadurch gekennzeichnet, daß der Sinuswellengenerator in Abhängigkeit der Steuerinformation bezüglich einer Gruppe von Anschlußeinheiten ein Übertragungsfrequenzsignal erzeugt, das wenigstens eine für diese Gruppe spezifische Frequenz enthält, wodurch eine selektive Adressierung dieser Gruppe ermöglicht wird.

5. Anordnung nach einem der vorhergehenden Ansprüche, dadurch gekennzeichnet, daß der Detektor (A4) einen in Reihe an das zweiadrige Kabel angeschlossen Widerstand (R5) aufweist, über den eine Spannung erzeugt wird, die sich entsprechend dem vom zweiadrigen Kabel gezogenen Strom ändert und die den Vorrichtungen zur Rekonstruktion (A7, A8, A9, A10) zugeführt wird.

6. Anordnung nach einem der vorangehenden Ansprüche, dadurch gekennzeichnet, daß die Stromsenke (B10) eine Stromschleife aufweist, die parallel zu dem zweiadrigen Kabel angeschlossen ist, und bei der die Leitfähigkeit zwischen Null und einem Wert wechseln kann, der einen Strom mit einer für die Feststellbarkeit der Stromveränderung geeigneten vorbestimmten Größe liefert, wobei der Gleichspannungspegel auf dem zweiadrigen Kabel im wesentlichen unverändert bleiben kann.

7. Anordnung nach Anspruch 6, dadurch gekennzeichnet, daß die Stromschleife die Emitter-Kollektor-Strecke in einem Transistor (T) umfaßt, die in Reihe mit einem Strombegrenzungswiderstand (RL) geschaltet ist, wodurch die Basis dieses Transistors eine Spannung empfängt, die sich entsprechend dem Bit-Sequenz-Signal ändert.

8. Anordnung nach Anspruch 6 oder 7, dadurch gekennzeichnet, daß die Anschlußleitungseinheit (TLU) einen Modulator (B8) für eine Phasenverschliebungsmodulation eines Bit-Sequenz-Signals vor der Zufuhr zu der Stromsenke aufweist, wobei die Zufuhr mit einer Vorrichtung, vorzugsweise einem Opto-Schalter (OP), erfolgt, die eine galvanische Isolation von der Übertragungsleitung erlaubt.

9. Anordnung nach einem der vorangehenden Ansprüche, dadurch gekennzeichnet, daß die Übertragungsfrequenzsignale eine Frequenz besitzen, die wenigstens um einen Faktor 3 höher ist als die Bitfrequenz der Bit-Sequenzen.

10. Anordnung nach einem der vorangehenden Ansprüche, dadurch gekennzeichnet, daß die Einrichtungen zur Rekonstruktion der Bit-Sequenzen in der zentralen Leitungseinheit (CLU) in der Reihenfolge von dem Ausgang des Detektors aus (A4) ein Hochpaßfilter (A5) aufweist, dessen Grenzfrequenz etwas niedriger ist als die eingesetzten Signalfrequenzen, ferner einen Differenzverstärker (A7), um die Impulssignale zu verstärken, ein Tiefpaßfilter (A8) mit einer Grenzfrequenz, die etwas höher ist als die Frequenz der Impulse, die durch die Stromveränderung hervorgerufen werden, sowie Einrichtungen (A9) zum Wiederherstellen der rechteckförmigen Gestalt der Impulse, und einen Demodulator (A10), um die übertragenen, vorzugsweise mit Phasenverschiebungen modulierten Bit-Sequenzen zu rekonstruieren.

11. Anordnung nach einem der vorangehenden Ansprüche, dadurch gekennzeichnet, daß die Einrichtung zur Rekonstruktion der Bit-Sequenzen in der Anschlußleitungseinheit (TLU) von dem zweiadrigen Kabel aus gesehen eine Eingangsstufe (B4) aufweisen, um den Pegel der von der zentralen Leitungseinheit (CLU) empfangenen Frequenzsignale anzupassen und um Signale mit tieferer Frenquenz zu unterdrücken, wobei die Eingangsstufe weiter eine Einrichtung für die galvanische Trennung von der Übertragungsleitung aufweist, ein Tiefpaßfilter (B5), dessen Grenzfrequenz etwas höher als die der Frequenzensignale ist, eine Einrichtung (B6) zum Wiederherstellen des rechteckförmigen Charakters der empfangenen Impulse, und einen Demodulator (B7), vorzugsweise einen Zwei-Frequenz-Diskriminator, um die frequenzverschobenen modulierten Übertragungsfrequenzsignale zu demodulieren.

## Revendications

1. Ensemble pour la transmission bidirectionnelle de séquences de bits entre une unité de commande centrale (CCU) et des unités terminales (TU) reliées à ladite unité de commande centrale par une ligne de transmission (L), par l'intermédiaire de laquelle lesdites unités terminales peuvent si besoin est être alimentées en énergie depuis une source d'alimentation à courant continu situé en ladite unité de commande centrale, caractérisé en ce que ladite ligne de transmission comprend un câble à deux conducteurs auquel sont reliées en parallèle une multiplicité d'unités terminales (TU1, TU2, . . .), et auquel ladite unité de commande centrale (CCU) est reliée par l'intermédiaire d'une unité de ligne centrale (CLU), ladite unité de ligne centrale comprenant, pour l'émission, un générateur (A2), commandé par lesdites séquences de bits (BS, Fig. 4), destiné à produire un signal de fréquence d'émission modulé par fréquence de bits, et un étage de sortie (A3) destiné à superposer ledit signal de fréquence d'émission à un signal de tension continue (VDC) produit par ladite source d'alimentation à courant continu, chacune desdites unités terminales étant reliée audit câble à deux conducteurs par l'intermédiaire d'une unité de ligne terminale (TLU) qui, pour la réception, comprend des moyens (B4, B5, B6, B7) propres à reconstruire des séquences de bits transmises à partir dudit signal de fréquence d'émission, et qui, pour l'émission, comprend une charge de courant (B10), commandée par des séquences de bits, propre à produire une variation de courant modulée par séquence de bits dans ledit câble à deux conducteurs, ladite unité de ligne centrale (CLU) comprenant, pour la réception, un détecteur (A4), connecté en série avec ledit câble à deux conducteurs, à l'effet de déceler lesdites variations de courant, et comprenant en outre des moyens (A7, A8, A9, A10) propres à reconstruire des séquences de bits à partir du signal de sorties dudit détecteur, les circuits d'entrée et de sorties de ladite unité de ligne centrale et desdites unités de ligne terminales qui sont reliées audit câble à deux conducteurs présentant une impédance élevée à la fois pour les signaux de fréquence et pour les tensions continues, et en ce qu'une unité de ligne terminale, dans certains cas, comprend des moyens de réception d'alimentation à courant continu, présentant une impédance élevée pour les signaux de fréquence, l'agencement étant tel que la transmission s'effectue dans un sens avec un signal de fréquence superposé à un niveau de tension continu sensiblement stable sur ladite ligne de transmission, dans l'autre sens, par une variation du courant continu absorbé sur la ligne de transmission, cependant qu'est conservée la possibilité d'alimenter en énergie lesdites unités terminales.

2. Ensemble selon la revendication 1, caractérisé en ce que ledit générateur (A2) comprend un générateur de signaux sinusoïdaux propre à produire un signal de fréquence d'émission sinuoïdal dont la fréquence change alternativement sous la dépendance d'information de séquence de bits.

3. Ensemble selon la revendication 2, caractérisé en ce que l'on fait alterner ledit générateur de signaux sinusoïdaux entre un signal sinusoïdal et une absence dudit signal sinusoïdal, en faisant ainsi recevoir dudit signal de fréquence d'émission la forme d'un signal à modulation de fréquence dont la fréquence alterne entre une fréquence prédéterminée et une fréquence nulle.

4. Ensemble selon la revendication 2 ou 3, caractérisé en ce que ledit générateur de signaux sinusoïdaux, sous la dépendance d'information de commande relativement à un groupe d'unités terminales, produit un signal de fréquence d'émission contenant au moins une fréquence spécifique audit groupe, en rendant ainsi possible un adressage sélectif dudit groupe.

5. Ensemble selon l'une quelconque des revendications précédentes, caractérisé en ce que ledit détecteur (A4) comprend une résistance (R5), montée en série avec ledit câble à deux conducteurs, aux bornes de laquelle est produite une tension que varie en fonction du courant absorbé sur ledit câble à deux conducteurs, et qui est appliquée auxdits moyens de reconstruction (A7, A8, A9, A10).

6. Ensemble selon l'une quelconque des revendications précédentes, caractérisé en ce que ladite charge de courant (B10) comprend une boucle de courant, connecté en parallèle audit câble à deux conducteurs, dans laquelle on peut faire alterner la conductibilité entre zéro et une valeur qui donne un courant d'intensité convenablement prédéterminé pour la détectabilité de ladite variation de courant, en permettant ainsi audit niveau de tension continu sur ledit câble à deux conducteur de rester sensiblement inchangé.

7. Ensemble selon la revendication 6, caractérisé en ce que ladite boucle de courant comprend le trajet émetteur-collecteur d'un transistor (T), monté en série avec une résistance de limitation d'intensité (RL), en permettant ainsi à la base dudit transistor de recevoir une tension qui varie en fonction d'un signal de séquence de bits.

8. Ensemble selon la revendication 6 ou 7, caractérisé en ce que ladite unité de ligne terminale (TLU) un modulateur (B8) destiné à moduler en phase un signal de séquence de bits avant acheminement à ladite charge de courant, dans lequel ledit acheminement a lieu, de préférence par l'intermédiaire d'un commutateur opto-électronique (OP), par des moyens permettant un isolement galvanique par rapport à ladite ligne de transmission.

9. Ensemble selon l'une quelconque des revendications précédentes, caractérisé en ce que lesdits signaux de fréquence d'émission présentent une fréquence qui est supérieure dans un rapport d'au moins 3 fois à la fréquence de bits desdites séquences de bits.

10. Ensemble selon l'une quelconque des revendications précédentes, caractérisé en ce que lesdits moyens de reconstruction de séquences de bits de ladite unité de ligne centrale (CLU) comprennent, dans cet ordre en partant de la sortie dudit détecteur (A4), un filtre passe-haut (A5) à fréquence de coupure un tant soit peu inférieure aux fréquences de signal utilisées, un amplificateur différentiel (A7) propre à amplifier des signaux impulsionnels, un filtre passe-bas (A8) à fréquence de coupure un tant soit peu supérieure à la fréquence des impulsions produites par ladite variation de courant, un moyen (A9) propre à rétablir le caractère rectangulaire du profil desdites impulsions, et un démodulateur (A10) propre à reconstruire des séquences de bits transmises, de préférence modulées en phase.

11. Ensemble selon l'une quelconque des revendications précédentes, caractérisé en ce que lesdits moyens de reconstruction de séquences de bits de ladite unité de ligne terminale (TLU) comprennent, tels que vus dudit câble à deux conducteurs, un étage d'entrée (B4) pour l'adaptation de niveau de signaux de fréquence reçus de ladite unité de ligne centrale (CLU) et pour la suppression de signaux à fréquence plus basse, ledit étage d'entrée comprenant en outre des moyens d'isolement galvanique par rapport à ladite ligne de transmission, un filtre passe-bas (B5) à fréquence de coupure un tant soit peu supérieure auxdits signaux de fréquence, un moyen (B6) propre à rétablir le caractère rectangulaire du profil des impulsions reçues, et un de modulateur (B7), formé de préférence par un discriminateur à deux fréquences, propre à démoduler un signal de fréquence d'émission modulé en fréquence.

FIG.1

FIG.2

FIG.3

3

FIG.4

0 035 992

FIG. 5

FIG. 6

5

FIG.7

FIG.8

FIG.9

FIG.10

FIG.11